# EUROPEAN PATENT SPECIFICATION

(11) **EP 0 575 854 B1**
(45) Date of publication and mention of the grant of the patent: **15.01.1997**
(21) Application number: 93109483.3
(22) Date of filing: 14.06.1993
(51) Int. Cl.: G05B 23/02, G06F 11/00

(54) **Mutual monitoring circuit for computers**
Schaltung für die gegenseitige Überwachung von Computergeräten
Circuit de surveillance mutuelle pour ordinateurs

(30) Priority: 17.06.1992 JP 157907/92
(43) Date of publication of application: 29.12.1993
(73) Proprietor: Sumitomo Electric Industries, Ltd., Osaka 541 (JP)
(72) Inventor: Hashiba, Hitoshi, c/o Osaka Works of Sumitomo, Konohana-ku, Osaka (JP); Isshiki, Isao, c/o Osaka Works of Sumitomo, Konohana-ku, Osaka (JP); Makino, Fumio, c/o Osaka Works of Sumitomo, Konohana-ku, Osaka (JP); Nakai, Yoshiharu, c/o Osaka Works of Sumitomo, Konohana-ku, Osaka (JP); Ueda, Seiji, c/o Osaka Works of Sumitomo, Konohana-ku, Osaka (JP)
(74) Representative: Schieschke, Klaus, Dipl.-Ing.

(56) References cited:
- EP-A- 0 322 141
- WO-A-89/12272
- DE-A- 2 108 836
- DE-A- 3 700 986
- DE-A- 3 726 489
- DE-A- 3 728 561
- US-A- 4 468 768

## Description

This invention relates to electronic control circuit comprising and monitoring a plurality of computers, more specifically for detecting any malfunctions or runaway of computer for controlling antilock brake system (ABS) for an automobile adapted to prevent locking of the wheels of the automobile by adjusting the pressure of brake fluid when applying a quick brake or the brake on a slippery road, thereby monitoring the system in a normal state.

An electric control circuit of ABS calculates wheel speeds and slip rates in a computer on the basis of information from wheel speed sensors mounted near the wheels and controls, based on the results of calculation, the hydraulic unit which adjusts the pressure of brake fluid more efficiently. Various types of such circuits are known.

Such an electric control circuit of ABS plays an important role of controlling the hydraulic unit, high safety and absolute reliability are essential requirements. Most typically, such a circuit includes at least two microcomputers provided parallel to each other and arranged so as to monitor each other.

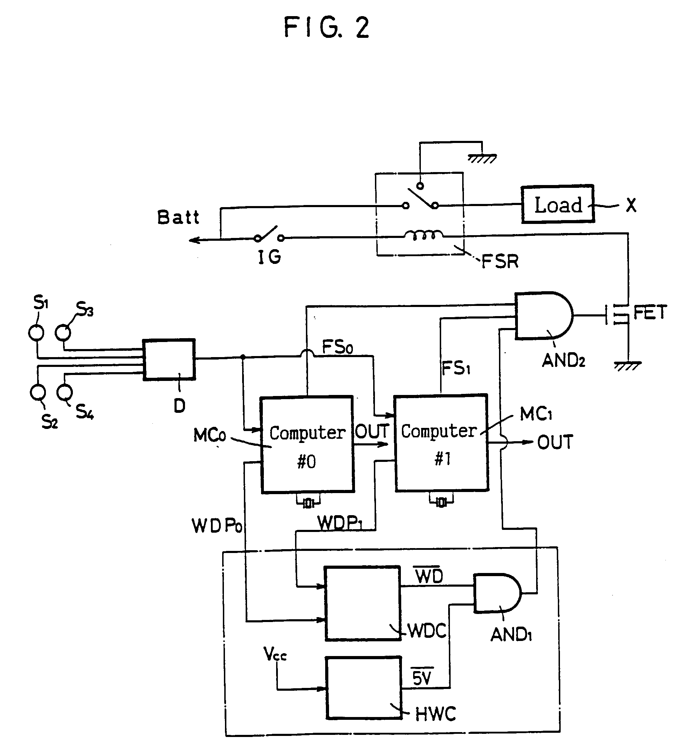

An electric control circuit of ABS shown in Fig. 2 by way of example has two microcomputers MC₀ and MC₁ (#0, #1). Wheel speed information supplied from wheel speed sensors S1 - S4 is branched in parallel in the form of pulse signals through an input processing circuit D and inputted in the respective computers. The computers perform arithmetic operations based on the input signals according to a predetermined program and give output signals OUT based on the results of arithmetic operations. These output signals are supplied to solenoid valves or the like as loads to control the braking pressure in the hydraulic line.

During normal and antilock control operations by the microcomputers, watchdog pulse signals WDP₀ and WDP₁ outputted from the two microcomputers MC₀ and MC₁ are inputted in a watchdog circuit WDC to monitor these signals and thus monitor any abnormality of the computers. In the watchdog circuit WDC, the watchdog pulse signals are compared and judgement is made. As far as the two microcomputers are both normal, judgement signals WD are outputted.

Also there is a monitoring circuit HWC for monitoring regulated voltage that is a power supply of the microcomputers. As far as the voltage is normal, that is, lower than a predetermined value, HW is output. The WD signals and HW signals are sent through an AND₁ gate to another gate AND₂.

Besides the above monitoring signals, failsafe signals FS₀ and FS₁ are output from the respective microcomputers MC₀and MC₁. The signals will turn to an L0 output if any abnormal behavior is detected during normal and antilock control operations. These signals are sent to the AND₂ gate. If the abovesaid signals are all normal, the AND₂ gate outputs signals to actuate a driving circuit FET and to activate a failsafe relay FSR. In this state, solenoid valve and a motor relay having loads X are in operative condition. Thus, if any one of the input signals to the AND₂ gate turns out to be abnormal, the failsafe relay FSR is cut off so that the antilock controlling is inhibited.

In a known method, if watchdog pulse signals from a main to sub-microcomputer are normal, the main one controls the loads X and if not, the loads X are deactivated by operating the failsafe relay immediately. In other method, the two microcomputers are treated equally. They monitor each other in detail. And if their calculated value such as acceleration, deceleration and vehicle speed is not identical, the loads X are deactivated by operating the failsafe relay. There is a watchdog timer circuit outside the microcomputers which monitor the watchdog pulse signals from the microcomputers. If the watchdog pulse signals are abnormal, the loads X are deactivated by operating the failsafe relay immediately.

In such a conventional monitoring circuit for monitoring the behavior of microcomputers, the normal watchdog pulse signals from the respective microcomputers are given to the watchdog circuit as far as the microcomputers are normal. A watchdog timer is triggered at predetermined time intervals.

Thus, if one of the microcomputers should malfunction and stop producing output signals or produce output signals having abnormal pulse widths, the watchdog timer will not be triggered, so that malfunction of the microcomputer is detectable.

But since such a conventional monitoring circuit using a watchdog timer is provided outside the microcomputers, if the microcomputers used are general-purpose ones, there will arise the problem of layout of parts in designing the circuit, that is, the problem of installation space. Further, the use of gate arrays or linear IC's will push up the cost.

German patent application DE-A-37 26 409 discloses a device for monitoring a computer system comprising two central processing units (CPU) in a motor vehicle, wherein the watchdog signal of the one CPU is monitored by the other CPU and vice versa. For detecting abnormal function of the corresponding other CPU, the one CPU which receives this watchdog signal samples this signal and compares the sampled signal with stored values which correspond to a signal to be received under normal operating conditions. The comparison is executed by means of a corresponding software.

European patent application EP-A-0 322 141 discloses a dual computer cross-checking system, wherein a main computer for controlling a process in accordance with input data is monitored via a monitoring computer. The monitoring function is therefore effected by means of a software used by the monitoring computer.

Moreover, German patent application DE-OS 21 08 836 discloses a dual computer system, wherein the operation of one computer is monitored by the corresponding other computer. Each computer sends a control signal to a monitoring circuit assigned to the other computer. The control signals are used as input signals for flipflops storing the control signal. The basic software program of the corresponding computer periodically reads the state of the flipflops and thereby obtains information about the state of the other computer.

An object of this invention is to provide an electronic control circuit including a mutual monitoring circuit which is free of the above-described problems and which is simple in structure and less expensive and can cope with any runaway state and is thus highly reliable.

The present invention reaches this object by providing an electronic control circuit including the features of claim 1.

In a preferred embodiment, the judgment units can judge the pulse width and duty of the watchdog signals.

Also, an input signal line of the load shut-off mechanism may be a negative-logic AND circuit and the signals from the judgement unit may be applied to the AND circuit, thereby shutting off the load with the load shut-off mechanism if the result of AND operation is abnormal.

Further, though each judgement unit outputs an abnormal judgement signal as soon as it detects any abnormality, it may output a normal judgement signal when the other microcomputer returns to normal only after detecting a predetermined number of normal signals continuously or after detecting normal pulse signals continuous during a predetermined time.

Further, each microcomputer preferably has a monitoring circuit which judges whether a corresponding other microcomputer is normal or not.

After turning power on and releasing resetting in the electronic control circuit, an initial test can be performed in which the watchdog pulse signals produced by the each microcomputer are converted deliberately into abnormal signals and sent to the monitoring circuit in the other microcomputer to check the monitoring function of the respective monitoring circuits.

According to the invention, if one or some of the microcomputers malfunctions or gets into an abnormal state, the mutual monitoring circuits detect such abnormal state and send judgement signals to the load shut-off mechanism to shut off the load.

Similarly, if all the microcomputers should fail, they can be mutually monitored by means of the monitoring circuits which are contained therein and operate without interposing software. Further, since the oscillation of the quartz oscillators cannot be stopped with software, it is possible to detect any abnormal state reliably and send judgement signals to the load shut-off mechanism to shut off the load.

The input signal line of the load shut-off mechanism is a negative-logic AND circuit. If any one of the abnormality judgement signals such as those representing abnormal in response to watchdog pulses or an abnormal signal as to regulated voltage that is a power supply of the microcomputers is inputted, the load shut-off mechanism is activated, thus shutting off the load.

After turning power on and releasing resetting, watchdog pulse signals produced by one computer are converted deliberately into abnormal signals in various patterns and transmitted to the monitoring circuit in the other computer to check the monitoring function of the respective monitoring circuits. The loads are actually shut off by some of the patterns and the monitoring circuit monitors this fact. But with most other patterns, the monitoring function can be electrically checked at high speed by monitoring the results of judgement on their own without being limited by the mechanically determined time for shutoff and connection of the loads.

The mutual monitoring circuits according to the present invention are extremely simple in structure and thus can be manufactured at low cost. Still, they can respond to any abnormal state in the most appropriate manner and are highly reliable.

Also, since the checking of monitoring function is carried out electrically after turning power on and releasing resetting, checking can be done at high speed.

Other features and objects of the present invention will become apparent from the following description made with reference to the accompanying drawings, in which:
Fig. 1 is a block diagram showing the monitoring circuit according to the present invention; and
Fig. 2 is a block diagram showing a conventional monitoring circuit.

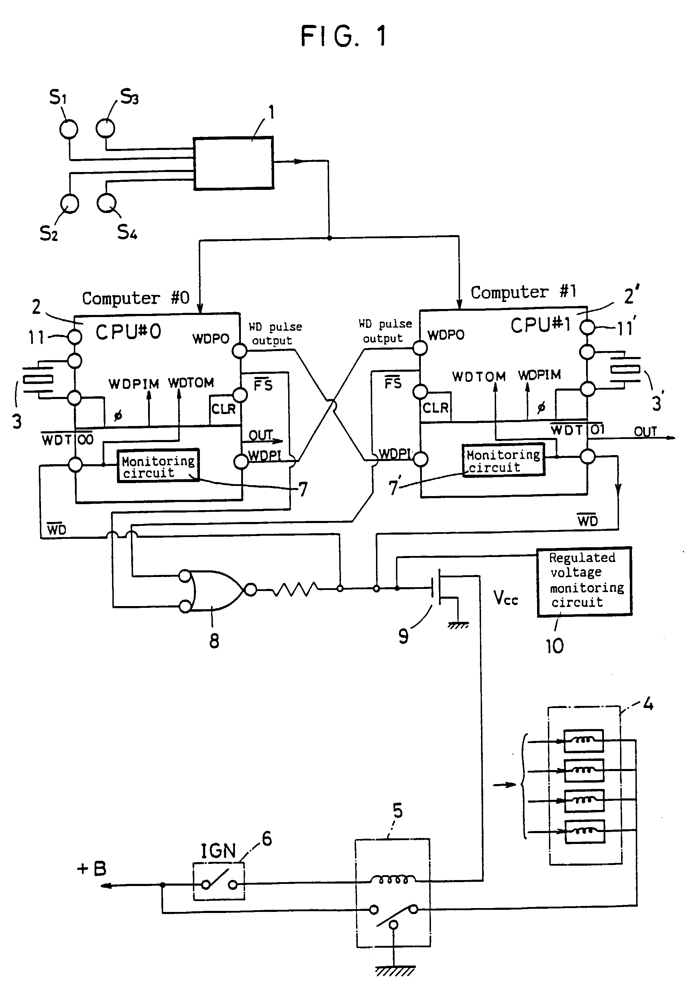

Fig. 1 shows one example of the electronic control circuit of the embodiment and is an entire block diagram including an electric control circuit of ABS and its monitoring circuit. The signals that represent wheel speed information from wheel speed sensors S1 - S4 are converted into pulse signals in a digitalizing circuit 1. They are then split into two lines and read by two independent microcomputers 2, 2'.

The two microcomputers 2, 2' operate on independent reference time periods given by reference oscillators 3 and 3'. In the embodiment, each computer contains a predetermined program for calculating wheel speeds and slip rates based on the wheel speed information and is provided with a memory for storing these data and information.

The output signals OUT of the microcomputers 2 and 2', which are the results of the calculations, are transmitted to loads such as solenoid valves 4 through e.g. the above-described output determining logic circuit (not shown). The solenoid valves 4 are connected to an unillustrated power supply battery through a contact of a failsafe relay 5. By turning the failsafe relay 5 ON, the solenoid valves 4 are ready ON-OFF control.

The mutual monitoring circuit has the following structure. The microcomputers 2, 2' are provided with monitoring circuits 7, 7', respectively, for monitoring the watchdog pulse signals produced by their respective counterparts. The monitoring circuits 7, 7' are a kind of watchdog timer circuits which operate independently of the software forming a program for antilock control.

The monitoring circuits may comprise watchdog timers having the function of e.g. retriggerable one-shot multivibrators or a similar function. The watchdog timers can measure the number and frequency of the watchdog pulses and detect both long-term and short-term abnormalities. The frequency of the watchdog pulses produced by each microcomputer is set, in a normal state, at a 50% duty ratio. The monitoring circuit has watchdog timers as judgement units which determine whether or not the frequency and duty of the pulse signals are normal. When the pulse signals are inputted as trigger signals, judgement on the frequency and duty is made in the judgement units. If it is judged that the microcomputer is functioning normally, a signal H is produced continuously. If judged abnormal, a signal L is produced.

As soon as one of the judgement units detects any abnormality, it produces abnormality judgement signals. But when the microcomputer on the other side returns to a normal state, the judgement unit will produce a normal judgement output after detecting a predetermined number of normal watchdog pulses or after detecting normal pulse signals continuous during a predetermined time.

Further, electric control circuit of ABS has a so-called self diagnosis function that each microcomputer monitors all of input and output signals so that it can find out any abnormality of its own system. And if either of microcomputers detects any abnormality of the system, it outputs a failsafe signal which is applied to an input signal of AND gate 8.

Its output signals are applied to an FET of a driving circuit 9 as gate signals. Upon receipt of the gate signals, the driving circuit 9 drives the failsafe relay 5 to put the solenoid valves 4 and a motor relay in an operative state.

Connections are made as shown in Fig. 1. A signal from the AND gate 8 to driving circuit 9 is representing abnormality judged from the above-described self-diagnosis of microcomputers. And wires or lines from WD signals of each microcomputer to driving circuit 9 are representing abnormality of either or both of microcomputers judged from mutual monitoring circuits 7, 7' which are mounted in the microcomputers. Also the output of a regulated voltage monitoring circuit 10 is connected to driving circuit 9. It is representing that regulated voltage which is a power supply of microcomputers is higher than predetermined value regarded as normal.

The two microcomputers 2, 2' have the function of monitoring, on their own, the results of judgement as to whether or not the programs in the normal and antilock control circuits are operating normally. This monitoring function in each computer is as follows: After switching on the ignition to turn the power on and releasing resetting, watchdog pulse signals produced by one computer are fed into the other computer after deliberately turning them into abnormal signals by means of a program for initial testing contained in the first computer; the second computer judges and monitors, on its own, the combination pattern of the abnormal and normal signals; and if the combination pattern coincides with a predetermined pattern, the second computer determines that its own monitoring function is normal. One bit in the register in each microcomputer is used for the judgement. If its function is abnormal, the signal fed to the one bit is checked and judged by a soft program.

Also, in order that the microcomputers can be used for general purposes, they are ordinarily provided with a stop mode or a halt mode. By applying special commands, i.e. by a soft program, the crystal oscillator can be stopped from oscillating. Thus, if the software should go uncontrollable, the oscillator might stop oscillating.

But according to this invention, in order to ensure high reliability, each microcomputer is provided with a specific external terminal 11. By setting the external terminal 11 at Hi or Lo, the oscillation stopping function with software is deleted. Namely, by setting the external terminal 11, the crystal oscillating circuit in each microcomputer operates solely on hardware.

The two microcomputers are monitored by the above-described monitoring circuit to see if they are operating normally in the following manner.

For the antilock control, the two microcomputers operate basically in the same way as conventional computers. Thus, no detailed description is made.

As far as there appears nothing abnormal during normal and antilock control operations, the two microcomputers 2, 2' both produce H signals as failsafe relay signals FS₀, FS₁, so that the AND gate 8 gives the H signal, to the gate of the driving circuit 9, thus turning the failsafe relay 5 ON. The AND gate 8 operates on the negative logic.

On the other hand, the mutual monitoring circuits 7, 7' monitor the two microcomputers to see if they are operating normally. The watchdog pulse signals as reference signals of one of the microcomputers are fed to the other microcomputer and checked by the mutual monitoring circuit in the latter computer. If it turns out that both microcomputers are operating normally, a signal H as a judgement signal is produced and given to the gate signal line of the driving circuit 9 as described above. Also, if there is no abnormality in the regulated voltage, a signal H is given to the gate signal line from the regulated voltage monitoring unit 10.

But if any one of the three kinds of monitoring signals turns out to be abnormal, for example, if the failsafe signal FS turns to L, the output of the AND gate 8 will also turn to L, so that the gate signal line of the driving circuit 9 will also turn to L even if the other signals are H. As a result, the failsafe relay 5 is cut. The same happens if the watchdog signal WD or the regulated voltage monitoring signal turns to L.

Thus, according to the above-described logic control, monitoring is carried out not only for the control operations by the two microcomputers but also for any abnormal behavior of the microcomputers themselves. Provided outside the computers is only a gate driving circuit having a simple structure.

## Claims

1. An electronic control circuit
a) comprising at least two microcomputers (2, 2') operating by mutually independent oscillating sources (3, 3'), each of said at least two microcomputers (2, 2') receiving input signals, such as speed information signals,
b) said at least two microcomputers (2, 2') performing arithmetic operations according to a predetermined program based on said input signals and producing output signals (OUT) based on the results of said arithmetic operations for controlling a load (4), such as solenoid valves,
c) said electronic control unit further comprising a mutual monitoring circuit for monitoring said at least two microcomputers (2, 2'), said mutual monitoring circuit shutting off said load (4) by a shut-off means (5) if a malfunction of at least one of said at least two microcomputers is detected,
d) said mutual monitoring circuit including at least one monitoring circuit (7, 7') provided in one of said at least two microcomputers (2, 2'),
e) the other of said at least two microcomputers (2, 2') sending a watchdog signal to said monitoring circuit (7', 7) of said one microcomputer (2', 2), said monitoring circuit (7', 7) evaluating the received watchdog signal in order to detect whether said other microcomputer (2, 2') functions normally or not,
**characterized in**
f) that said at least one monitoring circuit (7, 7') is operative without any software and includes a judgement unit and
g) that said one of said at least two microcomputers (2, 2') comprises a specific external terminal by which the microcomputer can be set in a mode wherein the corresponding oscillation source cannot be stopped by software.

2. An electronic control circuit as claimed in claim 1, **characterized in** that said each of said judgement units determines whether the pulse width and duty of the watchdog signal is normal or not.

3. An electronic control circuit as claimed in claim 1 or 2, **characterized in** that in an input signal line of said load shut-off means (5) there is provided a negative-logic AND circuit (8, 9) and that the signals from said judgement units are fed to said AND circuit (8), thereby shutting off the load (4) with said load shut-off means (5) if the result of the AND operation is abnormal.

4. An electronic control circuit as claimed in any of claims 1 to 3, **characterized in** that the mutual monitoring circuit outputs an abnormal judgement signal as soon as one of said judgement units detects any abnormality in the functioning of the corresponding microcomputer (2, 2') and that it outputs again a normal judgement signal when the corresponding microcomputer (2, 2') returns to normal after detecting a predetermined number of normal pulse signals continuously or after detecting normal pulse signals continuously during a predetermined time.

5. An electronic control circuit as claimed in any of claims 1 to 4, **characterized in** that each of said at least two microcomputers (2, 2') comprises a monitoring circuit which judges whether a corresponding other microcomputer is normal or not.

6. An electronic control circuit as claimed in any of claims 1 to 4, **characterized in** that after turning on the power and releasing resetting in said electronic control circuit an initial test is performed in which the watchdog pulse signals produced by each of said microcomputers (2, 2') are converted deliberately into abnormal signals and sent to the monitoring circuit of the corresponding other microcomputer (2, 2') to check the monitoring function of the respective monitoring circuits.

## Patentansprüche

1. Elektronische Steuerschaltung,
a) mit mindestens zwei Mikrocomputern (2, 2'), die mit voneinander unabhängigen oszillierenden Quellen (3, 3') arbeiten, wobei jeder der mindestens zwei Mikrocomputer (2, 2') Eingangssignale, wie z.B. Signale betreffend die Information über die Geschwindigkeit, erhält,
b) wobei die mindestens zwei Mikrocomputer (2, 2') arithmetische Operationen nach einem vorherbestimmten Programm auf der Basis der Eingangssignale durchführen und Ausgangssignale (OUT) auf der Basis der Ergebnisse der arithmetischen Operationen erzeugen, um eine Last (4), wie z.B. Magnetventile, zu steuern,
c) wobei die elektronische Steuereinheit außerdem eine Überwachungsschaltung zur gegenseitigen Überwachung der mindestens zwei Mikrocomputer (2, 2') aufweist, die die Last (4) durch eine Abschalteinheit (5) abschaltet, wenn eine Funktionsstörung mindestens eines der mindestens zwei Mikrocomputer ermittelt wird,
d) wobei die Überwachungsschaltung mindestens einen in einem der mindestens zwei Mikrocomputer (2, 2') angeordneten Überwachungsschaltkreis (7, 7') aufweist,
e) wobei der andere der mindestens zwei Mikrocomputer (2, 2') ein Watchdog-Signal an den Überwachungsschaltkreis (7', 7) des einen Mikrocomputers (2', 2) abgibt, der das erhaltene Watchdog-Signal auswertet, um zu ermitteln, ob der andere Mikrocomputer (2, 2') normal funktioniert oder nicht,
**dadurch gekennzeichnet,**
f) daß der mindestens eine Überwachungsschaltkreis (7, 7') ohne jegliche Software funktionsfähig ist und eine Beurteilungs-Einheit aufweist und
g) daß der eine der mindestens zwei Mikrocomputer (2, 2') ein spezielles externes Terminal aufweist, durch das der Mikrocomputer in einen Modus gebracht werden kann, in dem die entsprechende oszillierende Quelle nicht durch Software gestoppt werden kann.

2. Elektronische Steuerschaltung nach Anspruch 1, **dadurch gekennzeichnet,** daß jede der Beurteilungs-Einheiten bestimmt, ob die Impulsbreite und das Tastverhältnis des Watchdog-Signals normal ist oder nicht.

3. Elektronische Steuerschaltung nach Anspruch 1 oder 2, **dadurch gekennzeichnet,** daß in einer Eingangssignalleitung der Last-Abschalteinheit (5) ein UND-Gatter (8, 9) mit negativer Logik angeordnet ist, und daß die Signale aus den Beurteilungs-Einheiten dem UND-Gatter (8) zugeführt werden, wodurch die Last (4) durch die Last-Abschalteinheit (5) abgeschaltet wird, wenn das Ergebnis der UND-Operation abnormal ist.

4. Elektronische Steuerschaltung nach einem der Ansprüche 1 bis 3, **dadurch gekennzeichnet,** daß die Überwachungsschaltung ein abnormales Beurteilungs-Signal abgibt, sobald eine der Beurteilungs-Einheiten irgendeine Abnormalität in der Funktion des entsprechenden Mikrocomputers (2, 2') ermittelt, und daß sie wieder ein normales Beurteilungs-Signal abgibt, wenn der entsprechende Mikrocomputer (2, 2') zum Normalzustand zurückkehrt, nachdem eine vorherbestimmte Anzahl aufeinanderfolgender normaler Impulse detektiert wurde, oder nachdem kontinuierlich für eine vorherbestimmte Zeit normale Impulse detektiert wurden.

5. Elektronische Steuerschaltung nach einem der Ansprüche 1 bis 4, **dadurch gekennzeichnet,** daß jeder der mindestens zwei Mikrocomputer (2, 2') einen Überwachungsschaltkreis aufweist, der beurteilt, ob ein entsprechender anderer Mikrocomputer normal funktioniert oder nicht.

6. Elektronische Steuerschaltung nach einem der Ansprüche 1 bis 4, **dadurch gekennzeichnet,** daß nach dem Einschalten der Stromversorgung und dem Beenden eines Reset der elektronischen Steuerschaltung ein Anfangstest durchgeführt wird, bei dem die von jedem Mikrocomputer (2, 2') erzeugten Watchdog-Signale absichtlich in abnormale Signale umgewandelt werden und an den Überwachungsschaltkreis des entsprechenden anderen Mikrocomputers (2, 2') gesandt werden, um die Überwachungsfunktion des jeweiligen Überwachungsschaltkreises zu überprüfen.

## Revendications

1. Circuit de commande électronique
a) comprenant au moins deux micro-calculateurs (2,2') pilotés par deux sources oscillantes mutuellement indépendantes (3,3'), chacun desdits au moins des deux micro-calculateurs (2,2') recevant des signaux d'entrée, tels que des signaux d'information de vitesse,
b) lesdits au moins deux micro-calculateurs (2,2') réalisant des opérations arithmétiques selon un programme prédéterminé basé sur lesdits signaux d'entrée et produisant des signaux de sortie (OUT) basés sur les résultats desdites opérations arithmétiques pour commander une charge (4), telles que des soupapes à commande par solénoïde,
c) ladite unité de commande électronique comportant en outre un circuit de surveillance mutuel pour la surveillance desdits au moins deux micro-calculateurs (2,2'), ledit circuit de surveillance mutuel arrêtant ladite charge (4) par des moyens d'arrêt si un dysfonctionnement d'au moins un desdits au moins deux micro-calculateurs est détecté,
d) ledit circuit de surveillance mutuel comportant au moins un circuit de surveillance (7,7') prévu dans l'un desdits au moins deux micro-calculateurs (2,2'),
e) l'autre desdits au moins deux micro-calculateurs (2,2') envoyant un signal "chien de garde" audit circuit de surveillance (7,7') dudit un micro-calculateur (2,2'), ledit circuit de surveillance (7,7') évaluant le signal "chien de garde" reçu afin de détecter si ledit autre micro-calculateur (2,2') fonctionne normalement ou non,
caractérisé en ce que
f) ledit au moins un circuit de surveillance (7,7') fonctionne sans programme d'ordinateur et comporte une unité de décision et
g) en ce que ledit un desdits au moins deux micro-calculateurs (2,2') comporte une borne externe spécifique par laquelle le micro-calculateur peut être positionné selon un mode dans lequel la source d'oscillation correspondante ne peut pas être arrêtée par programme d'ordinateur.

2. Circuit de commande électronique selon la revendication 1, caractérisé en ce que lesdites chacune desdites unités de décision déterminent si la largeur d'impulsion et la puissance du signal "chien de garde" est normale ou non.

3. Circuit de commande électronique selon l'une des revendications 1 et 2, caractérisé en ce qu'il est prévu un circuit ET à logique négative (8,9) dans une ligne de signal d'entrée desdits moyens d'arrêt (5) de charge et en ce que les signaux provenant desdites unités de décision sont fournies audit circuit ET (8), de manière à arrêter la charge (4) avec lesdits moyens d'arrêt (5) de charge si le résultat de l'opération ET est anormal.

4. Circuit de commande électronique selon l'une quelconque des revendications 1 à 3, caractérisé en ce que le circuit de surveillance mutuel délivre un signal de décision anormal dès que l'une desdites unités de décision détecte une anormalité quelconque dans le fonctionnement du micro-calculateur correspondant (2,2') et en ce qu'il délivre à nouveau un signal de décision normal lorsque le micro-calculateur correspondant (2,2') retourne à l'état normal après une détection d'un nombre prédéterminé de signaux d'impulsion normal de façon continue ou après la détection de signaux d'impulsion normale de façon continue au cours d'une durée prédéterminée.

5. Circuit de commande électronique selon l'une quelconque des revendications 1 à 4, caractérisé en ce que chacun desdits au moins deux micro-calculateurs (2,2') comporte un circuit de surveillance qui détermine si un autre micro-calculateur correspondant est normal ou non.

6. Circuit de commande électronique selon l'une quelconque des revendications 1 à 4, caractérisé en ce qu'après la mise en marche de l'alimentation et la libération de la remise à l'état initial dans le circuit de commande électronique un test initial est réalisé dans lequel les signaux d'impulsion "chien de garde" produits par chacun desdits micro-calculateurs (2,2')" sont convertis délibérément en signaux anormaux et envoyés au circuit de surveillance de l'autre micro-calculateur correspondant (2,2') pour vérifier la fonction de surveillance des circuits de surveillance respectifs.
